Europäisches Patentamt

European Patent Office

Office européen des brevets

(19)

(11) Veröffentlichungsnummer: **0 379 969**
**A1**

# (12) EUROPÄISCHE PATENTANMELDUNG

(21) Anmeldenummer: 90100980.3

(22) Anmeldetag: 18.01.90

(51) Int. Cl.5: **C07F 5/04, B01F 17/02, C11D 1/14**

(30) Priorität: 27.01.89 DE 3902507

(43) Veröffentlichungstag der Anmeldung:
**01.08.90 Patentblatt 90/31**

(84) Benannte Vertragsstaaten:
**AT BE CH DE FR GB IT LI LU NL SE**

(71) Anmelder: **Henkel Kommanditgesellschaft auf Aktien**
**Henkelstrasse 67**
**D-4000 Düsseldorf 13(DE)**

(72) Erfinder: **Fabry, Bernd, Dr.**
**Danziger Strasse 31**
**D-4052 Korschenbroich 1(DE)**

(54) **Sulfonate von Alkenylboraten bzw. Alkenyl(poly)alkylenglykoletherboraten, Verfahren zu ihrer Herstellung und ihre Verwendung.**

(57) Sulfonate von Alkenylboraten bzw. Alkenyl(poly)-alkylenglykoletherboraten, erhältlich durch Sulfonierung von Borsäureestern der allgemeinen Formel I
$$[R^1O - (C_mH_{2m}O)_n]_pB(OH)_q \quad (I)$$
in der
$R^1O$ den Rest eines Fettalkohols mit 16 bis 22 Kohlenstoffatomen und mindestens einer olefinischen Doppelbindung,
$m$ die Zahlen 2 und/oder 3,
$n$ eine Zahl im Bereich von 0 bis 20,
$p$ die Zahlen 1, 2 oder 3 und
$q$ die Zahlen 0, 1 oder 2
bedeuten, wobei die Beziehung $p + q = 3$ gilt,
sowie anschließender Neutralisation und Hydrolyse der Sulfonierungsprodukte mit Basen, weisen interessante oberflächenaktive Eigenschaften auf und sind wertvolle Zwischenprodukte für die Herstellung von Fettalkohol-sulfonaten.

EP 0 379 969 A1

# Sulfonate von Alkenylboraten bzw. Alkenyl(poly)alkylenglykoletherboraten, Verfahren zu ihrer Herstellung und ihre Verwendung.

Die Erfindung betrifft Sulfonate von Alkenylboraten bzw. Alkenyl(poly)alkylenglykoletherboraten, erhältlich durch Sulfonierung von Borsäureestern der allgemeinen Formel I

$$[R^1O - (C_mH_{2m}O)_n]_pB(OH)_q \quad (I)$$

in der

$R^1O$ einen Rest eines Fettalkohols mit 16 bis 22 Kohlenstoffatomen und mindestens einer olefinischen Doppelbindung,

m die Zahlen 2 und/oder 3,

n eine Zahl im Bereich von 0 bis 20,

p die Zahlen 1, 2 oder 3 und

q die Zahlen 0, 1 oder 2

bedeuten, wobei die Beziehung p + q = 3 gilt, sowie anschließender Neutralisation und Hydrolyse der Sulfonierungsprodukte mit Basen.

Im Zusammenhang mit der Erfindung werden im folgenden die als Ausgangsmaterial verwendeten Alkenylborate und Alkenyl(poly)-alkylenglykolborate der allgemeinen Formel I der Einfachheit halber als Borsäureester und die Sulfonierungsprodukte bzw. die Salze derselben als Borsäureestersulfonate bezeichnet.

Sulfonate von Niedrigalkyl-Estern ungesättigter Carbonsäuren sind oberflächenaktive Verbindungen, die z.B. gemäß der EP-A 0 130 753 aus niedrigen Alkylestern ungesättigter Fettsäuren durch Umsetzung mit Schwefeltrioxid und anschließender Neutralisation sowie Hydrolyse hergestellt werden können. Die Struktur der letztlich erhaltenen Sulfonate ist noch nicht restlos aufgeklärt; es ist zu vermuten, daß dabei Gemische erhalten werden, die unter anderem aus Alken- und Hydroxyalkansulfonaten bestehen; vgl. J. Falbe, Surfactants in Consumer Products, p. 72-73 (1987), Springer-Verlag Berlin.

Es wurde nun gefunden, daß die Sulfonierungsprodukte der Borsäureester der obigen Formel I bzw. deren Salze Verbindungen mit interessanten oberflächenaktiven Eigenschaften sind, die zudem im pH-Bereich zwischen 0 und weniger als 12 überraschenderweise über einen längeren Zeitraum praktisch völlig hydrolysestabil sind.

Die Ausgangsprodukte für die Herstellung der Verbindungen der Erfindung, d.h. Borsäureester der allgemeinen Formel I, sind bekannt; sie lassen sich z.B. durch Kondensation von Fettalkoholen bzw. Anlagerungsprodukten von Ethylenoxid und/oder Propylenoxid an Fettalkohole mit wasserfreier Borsäure herstellen.

In der allgemeinen Formel I bedeutet die Gruppe $R^1O$ einen Rest eines Fettalkohols mit 16 bis 22 Kohlenstoffatomen und einer olefinischen Doppelbindung oder mehreren, wobei eine olefinische Doppelbindung oder zwei bevorzugt sind. Typische Vertreter geeigneter Fettalkohole mit einer oder zwei olefinischen Doppelbindungen sind Oleyl-, Elaidyl-, Linoleyl-, Gadoleyl-, Arachidyl-, Erucyl- und Brassidylalkohol. Wie in der Fettchemie üblich, können die genannten Fettalkohole in Form ihrer an diesen reichen technischen Gemische mit anderen, gesättigten oder ungesättigten Fettalkoholen eingesetzt werden, wie sie aus tierischen oder pflanzlichen Ölen oder Fetten, z.B. Palmöl, Palmkernöl, Soyaöl, Rüböl, Olivenöl, Sonnenblumenöl, Rindertalg und dergleichen zugänglich sind. Von technischen Fettalkoholgemischen abgeleitete Borsäureester der Formel I und die daraus hergestellten Borsäureestersulfonate der Erfindung können daher mehr oder weniger große Anteile an Resten gesättigter Fettalkohole enthalten.

Im Rahmen der Erfindung besonders bevorzugt sind technische Cetyl/Oleylalkohol-Schnitte mit Jodzahlen im Bereich von 50 bis 130.

Wenn in der allgemeinen Formel I n von Null verschieden ist, werden die Ausgangsverbindungen in Form von Estern der Borsäure mit Anlagerungsprodukten von 1-20 mol Ethylenoxid, Propylenoxid oder Ethylenoxid und Propylenoxid (in random- oder block-Verteilung) an ungesättigte Fettalkohole mit 16 bis 22 Kohlenstoffatomen bzw. an technische Gemische derselben eingesetzt.

Entsprechend der für die allgemeine Formel I angegebenen Bedeutung für p = 1, 2 oder 3, q = 0, 1 oder 2 und p + q = 3 ist es nicht erforderlich, daß sämtliche reaktiven Wasserstoffatome der Borsäure bei der Herstellung der Borsäureester mit Fettalkoholen umgesetzt sind. So können beispielsweise Partialester der Borsäure eingesetzt werden, die durchschnittlich 1 bis 2 $R^1O$-Reste enthalten. In den Borsäureestern der allgemeinen Formel I in diesen Fällen enthaltene freie OH-Gruppen stören weder bei der erfindungsgemäßen Sulfonierung noch beim Einsatz der erhaltenen Borsäureestersulfonate als oberflächenaktive Mittel oder als Zwischenprodukte für die Herstellung von Fettalkoholsulfonaten.

Besonders bevorzugt sind Borsäureester-sulfonate, die durch Sulfonierung von Borsäureestern der Formel I erhältlich sind, in der

$R^1O$ einen Oleyloxyrest,

m die Zahl 2 und

n eine Zahl im Bereich von 0 bis 10

bedeuten, sowie

p und q wie oben definiert sind.

Auch hier können Borsäureester eingesetzt werden, in denen die Gruppe $R^1O$ von technischen, oleylalkoholreichen Fettalkoholgemischen abgeleitet ist. Ester mit Anlagerungsprodukten von 1 bis 10 mol Ethylenoxid an die genannten Fettalkohole bzw. Fettalkoholgemische sind dabei bevorzugt.

Als Sulfonierungsmittel können die für die Sulfonierung von Olefinen üblichen eingesetzt werden, z.B. Schwefelsäure, Chlorsulfonsäure, Oleum, Amidosulfonsäure oder Schwefeltrioxid, wobei - insbesondere gasförmiges -Schwefeltrioxid bevorzugt ist.

Da die erfindungsgemäß eingesetzten Borsäureester der Formel I in der Gruppe $R^1O$ jeweils mindestens eine olefinische Doppelbindung aufweisen, können sie bei der Herstellung der Titelverbindungen mit der dem Index p entsprechenden Anzahl von Molen Schwefeltrioxid (je 1 mol pro Doppelbindung) reagieren. Es ist jedoch nicht erforderlich, sämtliche olefinische Doppelbindungen der eingesetzten Borsäurefettalkoholester zu sulfonieren. Auch Verbindungen, die durch Sulfonierung mit gegenüber der Anzahl der vorhandenen $R^1O$-Gruppen unterstöchiometrischen Schwefeltrioxidmengen zu erhalten sind, können in Betracht gezogen werden, beispielsweise mit durchschnittlich 1 bis 2 mol Schwefeltrioxid sulfonierte Borsäureester der allgemeinen Formel I, in der p = 3 ist.

Die Sulfonierung der Borsäureester der allgemeinen Formel I kann in der für Fettsäure-niedrigalkylester bekannten Weise erfolgen, z.B. mit gasförmigem Schwefeltrioxid in hierfür geeigneten Reaktoren, insbesondere vom Typ der Fallfilmreaktoren. Dabei wird das Schwefeltrioxid mit Luft oder Stickstoff verdünnt und vorzugsweise in Form eines Gasgemisches mit ca. 1 bis 8, insbesondere 3 bis 5 Vol.-% Schwefeltrioxid eingesetzt. Bevorzugt wird die Reaktion in Abwesenheit von Lösemitteln durchgeführt; es können jedoch sämtliche für die Sulfonierung ungesättigter Fettsäureester, Olefine, Aromaten und dergleichen üblichen Lösemitteln eingesetzt werden.

Die Herstellung der Borsäureester-sulfonate der Erfindung erfolgt bevorzugt durch Sulfonierung in einem Verhältnis von 0,5 bis 1,8, insbesondere 0,6 bis 1,5 und, besonders bevorzugt, von 1,0 bis 1,3 mol Schwefeltrioxid pro mol der in den Borsäureestern der allgemeinen Formel I enthaltenen olefinischen Doppelbindungen bei Temperaturen von 15 bis 80, insbesondere 40 bis 60 °C.

Das dabei erhaltene Sulfonierungsprodukt wird anschließend mit Basen, insbesondere wäßrigen Basen, unter Einhaltung eines pH-Wertes von mindestens 6 bis 11, insbesondere im Bereich zwischen 7 und 10, neutralisiert und hydrolysiert. Als Basen kommen hierbei Alkalimetallhydroxide wie Natrium-, Kalium- und Lithiumhydroxid, Erdalkalimetalloxide und -hydroxide wie Magnesiumoxid, Magnesiumhydroxid, Calciumoxid und Calciumhydroxid, Ammoniak und organische Basen wie Mono-, Di- und Tri-$C_2$-$C_4$-Alkanolamine, insbesondere Ethanolamin, Diethanolamin oder Triethanolamin, sowie primäre, sekundäre und tertiäre $C_1$-$C_4$-Alkylamine in Betracht. Alkalimetall- und Erdalkalimetallhydroxide und Ammoniak kommen dabei vorzugsweise in Form mehr oder weniger konzentrierter wäßriger Lösungen zum Einsatz.

Gemäß einer weiteren vorteilhaften Ausführungsform der Erfindung erfolgt die Hydrolyse der neutralisierten Sulfonierungsprodukte bei Temperaturen von 60 bis 80 °C bei den oben angegebenen pH-Werten. Dabei erfolgt unter anderem eine Hydrolyse intermediär gebildeter, cyclischer bzw. verbrückter Sulfonierungsprodukte; die enthaltenen Esterbindungen werden dabei überraschenderweise nicht hydrolysiert.

Wenn die eingesetzten Borsäureester, wie bei der Herstellung aus technischen Fettalkoholschnitten durchaus möglich ist, Anteile an Resten gesättigter Fettalkohole enthalten, können diese in den Borsäureester-sulfonaten der Erfindung verbleiben oder, falls erwünscht, in an sich bekannter Weise, z.B. durch Phasentrennung, abgetrennt werden. Entsprechende Verfahren sind an sich für Sulfonate von Niedrigalkylestern ungesättigter Fettsäuren bekannt, vgl. die bereits genannte EP-A 0 130 753.

Die Erfindung betrifft weiterhin ein Verfahren zur Herstellung von Borsäureester-sulfonaten mit den oben genannten Merkmalen. Weiterhin betrifft die Erfindung oberflächenaktive Mittel, die einzeln oder in Mischung Borsäureester-sulfonate der allgemeinen Formel II

$$[R^2O - (C_mH_{2m}O)_n]_pB(OH)_q \qquad (II)$$

enthalten,

in der

$R^2O$      eine Gruppe der Formeln IIIa bzw. IIIb

$$CH_3-(CH_2)_x-CH(OH)-(CH_2)_y-CH(SO_3M)-(CH_2)_z-CH_2-O- \qquad (IIIa)$$

bzw.

$$CH_3-(CH_2)_x-CH(SO_3M)-(CH_2)_y-CH(OH)-(CH_2)_z-CH_2-O- \qquad (IIIb)$$

bedeutet,

in welchen

x und z      Zahlen im Bereich von 0 bis 18,

y      die Zahlen 0, 1 oder 2 und

M      ein Alkali-, Ammonium- oder gegebenenfalls mono-, di- oder trialkyl- bzw. -hydroxyalkylsubstituiertes Ammoniumion ist,

wobei die Summe von x + y + z eine Zahl im Bereich von 14 bis 18 ergibt,

oder ein durch Abspaltung eines Moleküls Wasser aus der Gruppe der allgemeinen Formel IIIa bzw. IIIb gebildeter Rest ist, und

m      die Zahlen 2 und/oder 3,

n      eine Zahl im Bereich von 0 bis 20,

p      die Zahlen 1, 2 oder 3 sowie

q      die Zahlen 0, 1 oder 2

bedeuten, wobei die Beziehung p + q = 3 gilt.

Die Gruppe M kann dabei von Basen abgeleitet sein, die weiter oben erläutert sind; die Bedeutung M = Na, K oder $NH_4^+$ ist besonders bevorzugt. Bevorzugt sind oberflächenaktive Mittel, enthaltend - einzeln oder in Mischung - Borsäureestersulfonate der Formel II, in der

R²O     einen Rest der Formel IIIa bzw. IIIb mit 18 Kohlenstoffatomen,

m     die Zahl 2,

n     eine Zahl im Bereich von 0 bis 10,

x und z     Zahlen im Bereich von 0 bis 14 und

y     eine Zahl von 0, 1 oder 2

bedeuten, wobei die Summe x + y + z = 14 und M, p und q wie oben definiert sind.

Typischerweise umfassen derartige Gemische oberflächenaktiver Mittel Verbindungen der allgemeinen Formel II, in der R²O ein hydroxysulfonato-substituierter Oleyloxyrest ist. Der Index m ist in diesem Falle vorzugsweise gleich 2, wenn n von Null verschieden ist.

Die Erfindung betrifft weiterhin die Verwendung von Borsäureester-sulfonaten der allgemeinen Formel II als oberflächenaktive Mittel.

Die Erfindung betrifft weiterhin die Verwendung von Borsäureester-sulfonaten der allgemeinen Formel II zur Herstellung von Fettalkoholsufonaten der allgemeinen Formel IV

R²O - $(C_mH_{2m}O)_n$ - OH     (IV)

in der R²O eine Gruppe der allgemeinen Formel IIIa bzw. IIIb ist, wobei m, n, p, q, x, y, z und M wie oben definiert sind. Die Herstellung der Fettalkoholsulfate erfolgt durch alkalische Verseifung der Sulfonierungsprodukte der Borsäureester der allgemeinen Formel I bzw. der Sulfonate der allgemeinen Formel II. Letztere werden dabei unter Einhaltung eines pH-Wertes von 12 bis 14 solange mit wässrigen Basen auf Temperaturen von mindestens 70°C, vorzugsweise 80 bis 95°C, erhitzt, bis eine vollständige Verseifung eingetreten ist. Als wässrige Base ist Natronlauge, insbesondere als 25 bis 55 gew.-%-ige Lösung von NaOH in Wasser, bevorzugt. Die Reaktionszeit beträgt bevorzugt 0,5 bis 4 Stunden. Im übrigen ist es nicht erforderlich, die intermediär gebildeten Sulfonate der Formel II zu isolieren; man kann vielmehr auch die bei der Sulfonierung der Borsäureester der allgemeinen Formel I erhaltenen Sulfonierungsprodukte bei pH-Werten zwischen 12 und 14 und Temperaturen von mindestens 70°C gleichzeitig neutralisieren, hydrolysieren und verseifen.

Die Erfindung wird im folgenden anhand bevorzugter Ausführungsbeispiele näher erläutert.

Herstellung von Ausgangsverbindungen.

A. Borsäure-oleyl/cetyl-2-EO-ester.

In einem 1 l-Dreihalskolben mit Rührer, Kühler, Wasserabscheider und Innenthermometer wurden 350 g (1 mol) eines handelüblichen Anlagerungsproduktes von durchschnittlich 2 mol Ethylenoxid an 1 mol eines technischen Gemisches von Oleyl- und Cetylalkohol vorgelegt; das Anlagerungsprodukt wies eine Hydroxylzahl von 160 und eine Jodzahl von 36 auf. Anschließend wurden 24 g (0,4 mol) wasserfreie Borsäure (98%-ig) zugegeben. Das Reaktionsgemisch wurde unter Inertgas auf eine Temperatur von 120 bis 140°C gebracht, wobei im Verlauf von 160 min insgesamt 40 g Wasser (entsprechend 80% der Theorie) abdestilliert wurden. Das Produkt wurde in Form einer farblosen, milchigen Flüssigkeit erhalten und wurde ohne weitere Aufarbeitung umgesetzt. Die Jodzahl des Endproduktes betrug 37,8, das Zahlenmittel der Molmassen 1057.

B. Borsäure-oleyl/cetyl-5EO-ester.

Die unter A beschriebene Synthese wurde mit 487 g (1 mol) eines handelsüblichen Anlagerungsproduktes von durchschnittlich 5 mol Ethylenoxid an 1 mol eines technischen Gemisches von Oleyl- und Cetylalkohol wiederholt; das Anlagerungsprodukt wies eine Hydroxylzahl von 115 und eine Jodzahl von 26 auf. Im Verlauf der Reaktion wurden 14 g Wasser (entsprechend 80% der Theorie) abdestilliert. Die Jodzahl des Endproduktes betrug 27,5, das Zahlenmittel des Molgewichts 1468.

C. Borsäure-oleyl-ester.

Die unter A beschriebene Synthese wurde mit 267 g (1 mol) eines handelsüblichen, technischen Oleylalkohols (enthaltend ca. 90% Fettalkohole der Kettenlänge $C_{18}$; Hydroxylzahl 210, Jodzahl 95) wiederholt. Im Verlauf der Reaktion wurden 16 g Wasser (entsprechend 98% der Theorie) abdestilliert. Die Jodzahl des Endproduktes betrug 94,4, das Zahlenmittel der Molmasse 808.

D. Borsäure-oleyl-10EO-ester.

Die unter A beschriebene Synthese wurde mit 464 g (1 mol) eines Anlagerungsproduktes von durchschnittlich 10 mol Ethylenoxid an 1 mol eines handelsüblichen, technischen Oleylalkohols mit den unter C angegebenen Kenndaten wiederholt; das Anlagerungsprodukt wies eine Hydroxylzahl von 61 und eine Jodzahl von 27 auf. Die Umsetzung erfolgte mit 12 g (0,2 mol) wasserfreier Borsäure. Es wurden 7 g Wasser (entsprechend 74% der Theorie) abdestilliert. Die Jodzahl des Endproduktes betrug 36,0, das Zahlenmittel der Molmasse 2791.

Herstellung von Borsäureester-sulfonaten der Erfindung.

Der Aniontensidgehalt und die unsulfierten Anteile wurden in den folgenden Beispielen nach den DGF-Einheitsmethoden, Stuttgart, 1950-194, H-III-10 bzw. G-III-6b ermittelt. Die Bestimmung der Klett-Farbzahl erfolgte bei einer Konzentration von 5 Gew.-% Aniontensid bei einem pH-Wert von 7 unter Verwendung einer 1 cm Rundküvette und eines Blaufilters (400 bis 465 nm).

Beispiel 1.

Borsäure-oleyl/cetyl-2-EO-estersulfonat-Natriumsalz.

In einem 1 l-Sulfierreaktor mit Gaseinleitungsrohr und Mantelkühlung wurden 528 g (0,5 mol) Borsäure-oleyl/cetyl-2EO-ester, erhalten in der unter A beschriebenen Weise, enthaltend 0,78 mol Doppelbindungsäquivalente, bei 35 bis 45°C mit 62 g (0,78 mol) gasförmigem Schwefeltrioxid (entsprechend einem molaren Verhältnis von Doppelbindungen zu Schwefeltrioxid von 1:1) umgesetzt; die Schwefeltrioxid-Aufnahme betrug 86%.

Das eingesetzte Schwefeltrioxid wurde durch Erhitzen aus einer entsprechenden Menge 65%-igen Oleums ausgetrieben, mit Stickstoff auf eine Konzentration von 5 Vol.-% verdünnt und innerhalb von 60 min in den Borsäureester eingeleitet, wobei die Temperatur durch Kühlung unter 60°C gehalten wurde.

Nach der Sulfonierung wurde in das saure Reaktionsgemisch bei 60 bis 80°C innerhalb von 20 min portionsweise eine wäßrige Lösung von 40 g (1,0 mol) Natriumhydroxid in 250 ml Wasser eingerührt, wobei ein pH-Wert von 6 bis 8 eingehalten wurde; ein Nachsäuern der Produkte wurde nicht beobachtet. Unter diesen milden Bedingungen findet parallel zur Neutralisation zwar eine Hydrolyse gebildeter cyclischer bzw. verbrückter Zwischenstufen der Sulfonierung, jedoch praktisch keine Verseifung des sulfonierten Borsäureesters statt. Auf eine Bleichung des hellgelb gefärbten Produktes konnte verzichtet werden.

Kenndaten des Produktes:

Aniontensidgehalt: 5,0% = 0,004 Eq/100 g
Unsulfierte Anteile: 6,4%
Sulfat, berechnet als $Na_2SO_4$: 0,2%

Borat, berechnet als $Na_3BO_3$: 0,6%
Wasser (nach Fischer): 87,8%
Farbe (Klett): 35
Zahlenmittel der Molmasse: 1139.

Beispiel 2.

Borsäure-oleyl/cetyl-2-EO-estersulfonat-Natriumsalz.

Das Beispiel 1 wurde mit 80 g (1,0 mol) gasförmigen Schwefeltrioxid bei einem molaren Verhältnis von Doppelbindungsäquivalenten zu Schwefeltrioxid von 1:1,3 wiederholt; die Schwefeltrioxid-Aufnahme betrug 90%. Die Neutralisation wurde mit 44 g (1,1 mol) Natriumhydroxid in 250 ml Wasser wie im Beispiel 1 beschrieben durchgeführt.

Kenndaten des Produktes:

Aniontensidgehalt: 9,6% = 0,008 Eq/100 g
Unsulfierte Anteile: 7,2%
Sulfat, berechnet als $Na_2SO_4$: 0,2%
Borat, berechnet als $Na_3BO_3$: 0,6%
Wasser (nach Fischer): 82,4%
Farbe (Klett): 46
Zahlenmittel der Molmasse: 1204.

Beispiel 3.

Oleyl/cetyl-2EO-sulfonat-Natriumsalz.

Das Beispiel 1 wurde wiederholt, wobei das saure Sulfierprodukt jedoch mit 80 g (2,0 mol) NaOH in 250 ml Wasser 4 h bei pH 14 auf dem Dampfbad (95°C) hydrolysiert wurde, um den sulfonierten Borsäureester quantitativ zu verseifen. Im Anschluß wurde das Produkt mit wässriger Schwefelsäure neutralgestellt.

Kenndaten des Produkte:

Aniontensidgehalt: 8,0% = 0,017 Eq/100 g
Unsulfierte Anteile: 8,5%
Sulfat, berechnet als $Na_2SO_4$: 0,2%
Borat, berechnet als $Na_3BO_3$: 3,5%
Wasser (nach Fischer): 80,8%
Farbe (Klett): 89
Zahlenmittel der Molmasse: 458.

Beispiel 4.

Borsäure-oleyl/cetyl-5EO-estersulfonat-Kaliumsalz.

Analog zu der in Beispiel 2 beschriebenen Arbeitsweise wurden 734 g (0,5 mol) Borsäure-oleyl/cetyl-5EO-ester (Ausgangsprodukt B), entsprechend 0,79 mol Doppelbindungsäquivalenten, molares Verhältnis von Doppelbindungsäquivalenten zu Schwefeltrioxid 1:1,3, wiederholt; die Schwefeltrioxid-Aufnahme betrug 88%. Die Neutralisation erfolgte mit 62 g (1,1 mol) Kaliumhydroxid in 250 ml Wasser.

Kenndaten des Produktes:

Aniontensidgehalt: 6,2% = 0,004 Eq/100 g
Unsulfierte Anteile: 5,6%
Sulfat, berechnet als $Na_2SO_4$: 0,2%
Borat, berechnet als $K_3BO_3$: 0,6%
Wasser (nach Fischer): 87,4%
Farbe (Klett): 44
Zahlenmittel der Molmasse: 1650.

Beispiel 5.

Borsäure-oleyl-estersulfonat-Ammoniumsalz.

Gemäß der Arbeitsweise des Beispiels 2 wurden 404 g (0,5 mol) Borsäureoleylester (Ausgangsverbindung C) entsprechend 0,66 mol Doppelbindungsäquivalenten, und 69 g (0,86 mol) gasförmiges Schwefeltrioxid umgesetzt (molares Verhältnis von Doppelbindungsäquivalenten zu Schwefeltrioxid = 1:1,3). Die Reaktionszeit betrug 60 min; die Schwefeltrioxid-Aufnahme 83%. Das saure Reaktionsprodukt wurde anschließend in 200 ml einer 10%-igen Ammoniaklösung (entsprechend 20 g oder 1,2 mol Ammoniak) eingerührt und wie oben beschrieben aufgearbeitet.

Kenndaten des Produktes:

Aniontensidgehalt: 16,5% = 0,017 Eq/100 g
Unsulfierte Anteile: 5,1%
Sulfat, berechnet als $(NH_4)_2SO_4$: 1,1%
Borat, berechnet als $(NH_4)_3BO_3$: 0,9%
Wasser (nach Fischer): 76,4%
Farbe (Klett): 85
Zahlenmittel der Molmasse: 954.

Beispiel 6.

Borsäure-oleyl-10EO-estersulfonat-Natriumsalz.

In einem kontinuierlich arbeitenden Fallfilmreaktor wurden 2,8 kg (1,0 mol) Borsäure-oleyl-10EO-ester (Ausgangsprodukt D), entsprechend 3,95 mol Doppelbindungsäquivalenten, bei einem Durchsatz von 10 g/min mit gasförmigen Schwefeltrioxid im molaren Verhältnis von Doppelbindungsäquivalenten zu Schwefeltrioxid von 1:1,3 umgesetzt. Das rohe Sulfonierungsprodukt wurde kontinuierlich in 25%-ige Natronlauge eingerührt und wie vorbeschrieben aufgearbeitet.

Kenndaten des Produktes:

Aniontensidgehalt: 14,9% = 0,004 Eq/100 g
Unsulfierte Anteile: 6,7%
Sulfat, berechnet als $Na_2SO_4$: 0,9%
Borat, berechnet als $Na_3BO_3$: 0,9%
Wasser (nach Fischer): 76,6%
Farbe (Klett): 21
Zahlenmittel der Molmasse: 3315.

**Ansprüche**

1. Sulfonate von Alkenylboraten bzw. Alkenyl-(poly)alkylenglykoletherboraten, erhältlich durch Sulfonierung von Borsäureestern der allgemeinen Formel I
$$[R^1O - (C_mH_{2m}O)_n]_pB(OH)_q \qquad (I)$$
in der
$R^1O$     einen Rest eines Fettalkohols mit 16 bis 22 Kohlenstoffatomen und mindestens einer olefinischen Doppelbindung,
$m$     die Zahlen 2 und/oder 3,
$n$     eine Zahl im Bereich von 0 bis 20,
$p$     die Zahlen 1, 2 oder 3 und
$q$     die Zahlen 0, 1 oder 2
bedeuten, wobei die Beziehung $p + q = 3$ gilt, sowie anschließender Neutralisation und Hydrolyse der Sulfonierungsprodukte mit Basen.

2. Sulfonate von Alkenylboraten bzw. Alkenyl-(poly)alkylenglykoletherboraten nach Anspruch 1, erhältlich durch Sulfonierung von Borsäureestern der allgemeinen Formel I
$R^1O$     einen Oleyloxyrest,
$m$     die Zahl 2 und
$n$     eine Zahl im Bereich von 0 bis 10
bedeuten, sowie
$p$ und $q$ wie oben definiert sind.

3. Sulfonate von Alkenylboraten bzw. Alkenyl-(poly)alkylenglykoletherboraten nach Anspruch 1 oder 2, erhältlich durch Sulfonierung von Borsäureestern der allgemeinen Formel I, in der $R^1O$, m, n, p und q wie oben definiert sind, mit Schwefeltrioxid und anschließender Neutralisation und Hydrolyse der Sulfonierungsprodukte mit Basen.

4. Sulfonate von Alkenylboraten bzw. Alkenyl-(poly)alkylenglykoletherboraten nach mindestens einem der Ansprüche 1 bis 3, dadurch gekennzeichnet, daß die Sulfonierung, gegebenenfalls in inerten Lösemitteln, in einem Verhältnis von 0,5 bis 1,8, insbesondere 0,6 bis 1,5 mol Schwefeltrioxid pro mol der in der Borsäureestern der allgemeinen Formel I enthaltenen olefinischen Doppelbindungen bei Temperaturen von 15 bis 80, insbesondere 40 bis 60°C, erfolgt.

5. Sulfonate von Alkenylboraten bzw. Alkenyl-(poly)alkylenglykoletherboraten nach mindestens einem der Ansprüche 1 bis 4, dadurch gekennzeichnet, daß die Sulfonierung bei einem Verhältnis von 1,0 bis 1,3 Schwefeltrioxid pro mol olefinischer Doppelbindungen erfolgt.

6. Sulfonate von Alkenylboraten bzw. Alkenyl-(poly)alkylenglykoletherboraten nach mindestens einem der Ansprüche 1 bis 5, dadurch gekennzeichnet, daß die Neutralisation und Hydrolyse der Sulfonierungsprodukte mit wäßrigen Basen unter Einhaltung eines pH-Wertes von mindestens 6 bis 11, insbesondere von 7 bis 10, erfolgt.

7. Sulfonate von Alkenylboraten bzw. Alkenyl-(poly)alkylenglykoletherboraten nach mindestens einem der Ansprüche 1 bis 6, dadurch gekennzeichnet, daß die Hydrolyse der neutralisierten Sulfonierungsprodukte bei Temperaturen von 60 bis 80°C erfolgt.

8. Sulfonate von Alkenylboraten bzw. Alkenyl-(poly)alkylenglykoletherboraten nach mindestens einem der Ansprüche 1 bis 7, dadurch gekennzeichnet, daß die Neutralisation und Hydrolyse in Gegenwart von wäßrigen Basen aus der von Alkalimetallhydroxiden, Erdalkalimetallhydroxiden, Ammoniak, Mono-, Di- und Tri-$C_2$-$C_4$-alkanolaminen sowie primären, sekundären und tertiären Cl-$C_4$-Alkylaminen gebildeten Gruppe ausgeführt wird.

9. Verfahren zur Herstellung von Sulfonaten von Alkenylboraten bzw. Alkenyl(poly)-alkylenglykoletherboraten, dadurch gekennzeichnet, daß man Borsäureester der allgemeinen Formel I

$$[R^1O - (C_mH_{2m}O)_n]_pB(OH)_q \qquad (I)$$

in der

$R^1O$ einen Rest eines Fettalkohols mit 16 bis 22 Kohlenstoffatomen und mindestens einer olefinischen Doppelbindung,

m die Zahlen 2 und/oder 3,

n eine Zahl im Bereich von 0 bis 20,

p die Zahlen 1, 2 oder 3 und

q die Zahlen 0, 1 oder 2

bedeuten, wobei die Beziehung p + q = 3 gilt, sulfoniert sowie die Sulfonierungsprodukte anschließend mit Basen neutralisiert und hydrolysiert.

10. Verfahren nach Anspruch 9, dadurch gekennzeichnet, daß man Borsäureester der allgemeinen Formel I,

in der

$R^1O$ einen Oleyloxyrest,

m die Zahl 2 und

n eine Zahl im Bereich von 0 bis 10 bedeuten sowie p und q wie oben definiert sind, sulfoniert, neutralisiert und hydrolysiert.

11. Verfahren nach Anspruch 9 oder 10, dadurch gekennzeichnet, daß man Borsäureester der allgemeinen Formel I, in der $R^1O$, m, n, p und q wie oben definiert sind, mit Schwefeltrioxid sulfoniert und die Sulfonierungsprodukte anschließend mit Basen neutralisiert und hydrolysiert.

12. Verfahren nach mindestens einem der Ansprüche 9 bis 11, dadurch gekennzeichnet, daß die Sulfonierung, gegebenenfalls in inerten Lösemitteln, in einem Verhältnis von 0,5 bis 1,8, insbesondere 0,6 bis 1,5 mol Schwefeltrioxid pro mol der in der Borsäureestern der allgemeinen Formel I enthaltenen olefinischen Doppelbindungen bei Temperaturen von 15 bis 80, insbesondere 40 bis 60°C, erfolgt.

13. Verfahren nach mindestens einem der Ansprüche 9 bis 12, dadurch gekennzeichnet, daß die Sulfonierung bei einem Verhältnis von 1,0 bis 1,3 Schwefeltrioxid pro mol olefinischer Doppelbindungen erfolgt.

14. Verfahren nach mindestens einem der Ansprüche 9 bis 13, dadurch gekennzeichnet, daß die Neutralisation und Hydrolyse der Sulfonierungsprodukte mit wäßrigen Basen unter Einhaltung eines pH-Wertes von mindestens 6 bis 11, insbesondere von 7 bis 10, erfolgt.

15. Verfahren nach mindestens einem der Ansprüche 9 bis 14, dadurch gekennzeichnet, daß die Hydrolyse der neutralisierten Sulfonierungsprodukte bei Temperaturen von 60 bis 80°C erfolgt.

16. Verfahren nach mindestens einem der Ansprüche 9 bis 15, dadurch gekennzeichnet, daß die Neutralisation und Hydrolyse in Gegenwart von wäßrigen Basen aus der von Alkalimetallhydroxiden, Erdalkalimetallhydroxiden, Ammoniak, Mono-, Di- und Tri-$C_2$-$C_4$-alkanolaminen sowie primären, sekundären und tertiären $C_1$-$C_4$-Alkylaminen gebildeten Gruppe ausgewühlt sind.

17. Oberflächenaktive Mittel, enthaltend - einzeln oder in Mischung - Sulfonate von Alkenylboraten bzw. Alkenyl(poly)alkylenglykoletherboraten der allgemeinen Formel II

$$[R^2O - (C_mH_{2m}O)_n]_pB(OH)_q \qquad (II)$$

in der

$R^2O$ eine Gruppe der Formel IIIa bzw. IIIb

$CH_3-(CH_2)_x-CH(OH)-(CH_2)_y-CH(SO_3M)-(CH_2)_z-CH_2-O-$ (IIIa)

bzw.

$CH_3-(CH_2)_x-CH(SO_3M)-(CH_2)_y-CH(OH)-(CH_2)_z-CH_2-O-$ (IIIb)

bedeutet,

in welchen

x und z Zahlen im Bereich von 0 bis 18,

y die Zahlen 0, 1 oder 2 und

M ein Alkali-, Ammonium- oder gegebenenfalls mono-, di-oder trialkyl- bzw. -hydroxyalkylsubstituiertes Ammoniumion ist,

wobei die Summe von x + y + z eine Zahl im Bereich von 14 bis 18 ergibt,

oder ein durch Abspaltung eines Moleküls Wasser aus der Gruppe der allgemeinen Formel IIIa bzw. IIIb gebildeter Rest ist, und

m die Zahlen 2 und/oder 3,

n eine Zahl im Bereich von 0 bis 20,

p die Zahlen 1, 2 oder 3 sowie

q die Zahlen 0, 1 oder 2

bedeuten, wobei die Beziehung p + q = 3 gilt.

18. Oberflächenaktive Mittel nach Anspruch 17, enthaltend Sulfonate von Alkenylboraten bzw. Alkenyl(poly)alkylenglykoletherboraten der allgemeinen Formel II, in der

$R^2O$ einen Rest eines sulfonierten Fettalkohols mit 18 Kohlenstoffatomen der Formel IIIa bzw. IIIb,

m die Zahl 2,

n eine Zahl im Bereich von 0 bis 10,

x und z Zahlen im Bereich von 0 bis 14 und

y eine Zahl von 0, 1 oder 2

bedeuten,

wobei die Summe x + y + z = 14 ist und M, p und q wie oben definiert sind.

19. Verwendung von Sulfonaten von Alkenylboraten bzw. Alkenyl(poly)alkylenglykoletherboraten nach mindestens einem der Ansprüche 1 bis 8 als oberflächenaktive Mittel.

20. Verwendung von Sulfonaten von Alkenylboraten bzw. Alkenyl(poly)alkylenglykoletherboraten nach mindestens einem der Ansprüche 1 bis 8 zur Herstellung von Fettalkoholsulfonaten der allgemeinen Formel IV

$$R^2O - (C_mH_{2m}O)_n - OH \qquad (IV)$$

in der $R^2O$ eine Gruppe der allgemeinen Formel IIIa bzw. IIIb ist, wobei

x, y, z und M wie oben definiert sind und m sowie n die obigen Bedeutungen aufweisen.

21. Verwendung nach Anspruch 20, dadurch gekennzeichnet, daß man die Sulfonate von Alkenylboraten bzw. Alkenyl(poly)alkylenglykoletherboraten bei pH-Werten zwischen 12 und 14 mit wäßrigen Basen, insbesondere Natronlauge, verseift.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 042 952 (E.A. MAUERSBERGER) * Beispiel 2; Anspruch 2; Spalte 1, Absatz 1 * --- | 1,19 | C 07 F 5/04 B 01 F 17/02 C 11 D 1/14 |
| A | DE-B-2 027 812 (EXXON RESEARCH AND ENGINEERING CO.) * Anspruch * --- | 1 | |
| A | US-A-4 440 656 (A.G. HORODYSKY) * Anspruch 1 * ----- | 1 | |

**RECHERCHIERTE SACHGEBIETE (Int. Cl.5)**

C 07 F 5/04
B 01 F 17/02
C 11 D 1/14

Der vorliegende Recherchenbericht wurde für alle Patentansprüche erstellt

| Recherchenort | Abschlußdatum der Recherche | Prüfer |
|---|---|---|
| BERLIN | 08-03-1990 | KAPTEYN H G |